# EUROPÄISCHE PATENTANMELDUNG

(11) **EP 4 625 221 A1**
(43) Veröffentlichungstag der Anmeldung: **01.10.2025**
(21) Anmeldenummer: 24167502.4
(22) Anmeldetag: 28.03.2024
(51) Int. Cl.: G06F 21/53, G06F 9/44, G06F 12/14, G06F 21/72, G06F 21/79, G06F 21/85

(54) **VERFAHREN ZUM SICHEREN BETREIBEN EINES BETRIEBSSYSTEMS ODER EINER FIRMWARE AUF EINER HARDWARE-PLATTFORM UND HARDWARE-PLATTFORM**

(71) Anmelder: Siemens Aktiengesellschaft, 80333 München (DE)
(72) Erfinder: Bauer, Sven, 85591 Vaterstetten (DE); Falk, Rainer, 85435 Erding (DE); Zeschg, Thomas, 81543 München (DE)
(74) Vertreter: Siemens Patent Attorneys

(57) **Zusammenfassung**

Das Verfahren ist insbesondere ein computerimplementiertes Verfahren und dient zum sicheren Betreiben eines Betriebssystems oder einer Firmware auf einer Hardware-Plattform mit mindestens einem externen RAM-Speicher. Bei dem erfindungsgemäßen Verfahren wird dem Betriebssystem oder der Firmware ein virtualisiertes RAM bereitgestellt und Daten des virtualisierten RAMs werden mittels Softwareverschlüsselung verschlüsselt und nachfolgend in dem mindestens einen externen RAM-Speicher gespeichert.

Die Hardware-Plattform ist zur Ausführung eines solchen Verfahrens eingerichtet.

## Beschreibung

Die Erfindung betrifft ein Verfahren zum sicheren Betreiben eines Betriebssystems oder einer Firmware auf einer Hardware-Plattform sowie eine Hardware-Plattform.

Die Sicherstellung der Vertraulichkeit und Integrität von sensiblen Daten ist eine große technische Herausforderung. Nicht nur bei der Übertragung von Daten, sondern auch bei ihrer Verarbeitung und beim Abspeichern können Daten ein wichtiges Angriffsziel sein. Bei industriellen Geräten sind Angriffstypen wie insbesondere physische Angriffe, etwa Seitenkanalangriffe, Fault-Injection Angriffe und Cold-Boot Angriffe bekannt. Dies ist insbesondere bei Hardware-Pattformen im industriellen Umfeld relevant.

Es ist vor diesem Hintergrund eine Aufgabe der vorliegenden Erfindung, ein sichereres Betreiben eines Betriebssystems oder einer Firmware auf einer Hardware-Plattform zu ermöglichen. Es ist ferner Aufgabe der Erfindung, eine verbesserte Hardware-Plattform zu schaffen, welche sich sicherer betreiben lässt als bislang bekannt.

Diese Aufgabe der Erfindung wird mit einem Verfahren zum sicheren Betreiben eines Betriebssystems oder einer Firmware auf einer Hardware-Plattform mit den in Anspruch 1 angegebenen Merkmalen sowie mit einer Hardware-Plattform mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist insbesondere ein computerimplementiertes Verfahren und dient zum sicheren Betreiben eines Betriebssystems oder einer Firmware auf einer Hardware-Plattform mit mindestens einem externen RAM-Speicher. Bei dem erfindungsgemäßen Verfahren wird dem Betriebssystem oder der Firmware ein virtualisiertes RAM bereitgestellt und Daten des virtualisierten RAMs werden mittels Softwareverschlüsselung verschlüsselt und nachfolgend in dem mindestens einen externen RAM-Speicher gespeichert.

Durch die Bereitstellung von virtualisiertem Arbeitsspeicher und die Verschlüsselung der Daten mittels Software wird ein kryptographischer Schutz der Daten ermöglicht, ohne dass dedizierte Hardware-Features erforderlich sind. Dies erleichtert die Implementierung des Verfahrens auf verschiedenen Hardware-Plattformen und senkt die Kosten für den Schutz sensibler Daten enorm.

Bei dem erfindungsgemäßen Verfahren ist vorzugsweise der mindestens eine externe RAM-Speicher mit mindestens einem externen RAM-Baustein gebildet. Diese Weiterbildung der Erfindung gewährleistet den sicheren Betrieb eines Betriebssystems oder einer Firmware auf einer Hardware-Plattform durch die Verschlüsselung und Speicherung der Daten auch in einem mindestens einen externen RAM-Speicher. Gerade externe RAM-Speicher können einen einfachen Angriffsvektor bilden, da Daten eines virtualisierten RAMS regelmäßig im Klartext in externen RAM-Speichern gespeichert werden. In dieser Weiterbildung der Erfindung ist die Datensicherheit also gegenüber dem Stand der Technik besonders deutlich erhöht.

In einer vorteilhaften Weiterbildung der Erfindung werden bei dem Verfahren sämtliche Daten des virtualisierten RAMs im mindestens einen externen RAM-Speicher gespeichert. Dadurch wird eine umfassende Verschlüsselung und Schutz der Daten gewährleistet. Alle sensiblen Informationen, die im virtualisierten RAM gespeichert sind, werden vor der Ablage im mindestens einen externen RAM-Speicher verschlüsselt und sicher im mindestens einen externen RAM-Speicher abgelegt. Dies bietet einen sehr robusten Schutz gegen unbefugten Zugriff und erhöht die Sicherheit des erfindungsgemäßen Verfahrens.

Bevorzugt und vorteilhaft werden bei dem erfindungsgemäßen Verfahren Swap-Daten des virtualisierten RAMs im mindestens einen externen RAM-Speicher gespeichert. Dadurch wird eine effiziente Nutzung des Speichers und eine verbesserte Systemleistung ermöglicht. Die Swap-Daten können auf einer Festplatte abgelegt werden oder im mindestens einen externen RAM-Speicher platziert werden. Dies führt zu schnelleren Zugriffszeiten und einer insgesamt besseren Leistung des Systems.

In einer vorteilhaften Weiterbildung der Erfindung wird bei dem Verfahren der mindestens eine externe RAM-Speicher mit mindestens einer Festplatte und/oder mindestens einer Festplattenpartition gebildet. Dadurch wird eine flexible und kostengünstige Speicherlösung ermöglicht. Indem Festplatten oder Festplattenpartitionen zur Bildung des externen RAM-Speichers genutzt werden, können vorhandene Ressourcen effizient eingesetzt werden. Dies führt zu einer kosteneffektiven Implementierung und ermöglicht eine Skalierbarkeit des Speichersystems.

Vorzugsweise werden bei dem erfindungsgemäßen Verfahren die Daten nach einem Auslesen aus dem mindestens einen externen RAM-Speicher mittels Softwareentschlüsselung entschlüsselt. Dies ermöglicht einen Zugriff auf die ursprünglichen Daten. Nachdem die verschlüsselten Daten aus dem mindestens einen externen RAM-Speicher gelesen wurden, können sie mittels Softwareentschlüsselung wieder in ihre ursprüngliche Form zurückgewandelt werden. Dadurch wird eine nahtlose Nutzung der Daten ermöglicht.

Vorzugsweise werden bei dem Verfahren gemäß der Erfindung die Daten des virtualisierten RAMs abhängig von einer Sicherheitsrichtlinie und abhängig von dem Inhalt des virtualisierten RAMs mittels Softwareverschlüsselung verschlüsselt und im mindestens einen externen RAM-Speicher gespeichert. Dadurch wird eine flexible und anpassungsfähige Verschlüsselung ermöglicht. Die Verschlüsselung der Daten erfolgt risikoangepasst abhängig von der Sicherheitsrichtlinie und dem Inhalt des virtualisierten RAMs. Dies ermöglicht eine granulare und einem möglichen Schaden adäquate Kontrolle über die Verschlüsselung und eine Anpassung an spezifische Anforderungen des Systems.

Bevorzugt wird bei dem Verfahren gemäß der Erfindung ein unverschlüsselter Speicherzugriff auf den mindestens einen externen RAM-Speicher abhängig von der Sicherheitsrichtlinie unterbunden. Dadurch wird die Sicherheit des Systems erhöht und unbefugter Zugriff auf die Daten verhindert. Durch die Implementierung einer Sicherheitsrichtlinie, die den unverschlüsselten Speicherzugriff einschränkt oder unterbindet, wird gewährleistet, dass die Daten dann, wenn sie nicht in den mindestens einen externen Speicher gelangen sollen, infolge des unterbundenen Speicherzugriffs nicht im mindestens einen externen RAM-Speicher gespeichert werden können. Auf diese Weise lässt sich erzwingen, dass anstelle des externen RAM-Speichers eine verschlüsselte Swap-Partition oder eine Swap-Datei herangezogen werden muss, da der mindestens eine externe RAM-Speicher infolge des unterbundenen Speicherzugriffs nicht zur Verfügung steht.

In einer bevorzugten Weiterbildung der Erfindung weist die Hardware-Plattform einen Prozessor auf und die Softwareverschlüsselung erfolgt mittels des Prozessors. Die Softwareverschlüsselung kann dann intern in der Hardware-Plattform erfolgen, ohne dass Klartextinformationen die Hardware-Plattform verlassen.

In einer vorteilhaften Weiterbildung der Erfindung werden mindestens zwei Betriebssysteme oder Firmwares auf der Hardware-Plattform betrieben und das Verfahren wird für jedes der Betriebssysteme oder Firmwares durchgeführt. Dabei wird für die Softwareverschlüsselung jeweils ein eigener separater Schlüssel verwendet. Dies erhöht die Sicherheit und Isolation der Daten. Jedes Betriebssystem oder jede Firmware auf der Hardware-Plattform kann seine eigenen verschlüsselten Daten im mindestens einen externen RAM-Speicher ablegen, wobei für jede Instanz ein separater Schlüssel verwendet wird. Dadurch wird eine hohe Sicherheit und Trennung der Daten zwischen den verschiedenen Systemen gewährleistet.

Die erfindungsgemäße Hardware-Plattform einen externen RAM-Speicher und einen Hypervisor auf. Der Hypervisor stellt einem Betriebssystem oder einer Firmware ein virtualisiertes RAM bereit und verschlüsselt die Daten des virtualisierten RAMs mittels Softwareverschlüsselung, bevor sie im mindestens einen externen RAM-Speicher gespeichert werden. Dadurch wird eine sichere Datenverschlüsselung und -speicherung ermöglicht. Der Hypervisor agiert als Vermittler zwischen dem Betriebssystem oder der Firmware und dem externen RAM-Speicher, wodurch eine zusätzliche Schutzschicht für die Daten geschaffen wird. Dies gewährleistet eine sichere Speicherung der Daten und erhöht die Sicherheit des Systems insgesamt.

In einer vorteilhaften Weiterbildung der Erfindung weist die Hardware-Plattform ein hardwarebasiertes Kryptographie-Beschleunigungsmodul auf, das zur Beschleunigung der Softwareverschlüsselung ausgebildet ist. Dadurch wird die Leistung und Effizienz der Softwareverschlüsselung verbessert, was zu einer schnelleren Durchführung des Verfahrens führt. Das hardwarebasierte Kryptographie-Beschleunigungsmodul kann speziell für die Durchführung von Verschlüsselungs- und Entschlüsselungsaufgaben optimiert sein. Dies ermöglicht eine schnellere und effizientere Verarbeitung der Daten, was wiederum zu einer verbesserten Systemleistung führt. Gleichzeitig bleibt die Flexibilität und Nachrüstbarkeit der Verschlüsselung als Softwareverschlüsselung gewährleistet.

In einer vorteilhaften Weiterbildung der Erfindung handelt es sich bei der Hardware-Plattform um ein industrielles Steuergerät und/oder ein Fertigungsgerät und/oder ein Bearbeitungsgerät. Dadurch können die zuvor beschriebenen Vorteile der Hardware-Plattform in industriellen Umgebungen genutzt werden und eine sichere Datenspeicherung im industriellen Umfeld gewährleistet werden. Industrielle Steuergeräte, Fertigungsgeräte oder Bearbeitungsgeräte verarbeiten oft sensible Daten und erfordern einen robusten Schutzmechanismus, was diese Weiterbildung der Erfindung passgenau adressiert.

Nachfolgend wird die Erfindung anhand der Zeichnung näher erläutert.

Es zeigen:
- Fig. 1: ein erstes Ausführungsbeispiel einer erfindungsgemäßen Hardware-Plattform mit einem Hypervisor schematisch in einer Prinzipskizze,
- Fig. 2: ein zweites Ausführungsbeispiel der erfindungsgemäßen Hardware-Plattform mit einem Hypervisor in einer Prinzipskizze,
- Fig. 3: ein Ablaufdiagramm für ein erstes Ausführungsbeispiel eines erfindungsgemäßes Verfahren zum Betreiben einer Hardware-Plattform schematisch in einem Blockdiagramm, sowie
- Fig. 4: ein Ablaufdiagramm für ein zweites Ausführungsbeispiel des erfindungsgemäßen Verfahrens zum Betreiben einer Hardware-Plattform schematisch in einem Blockdiagramm.

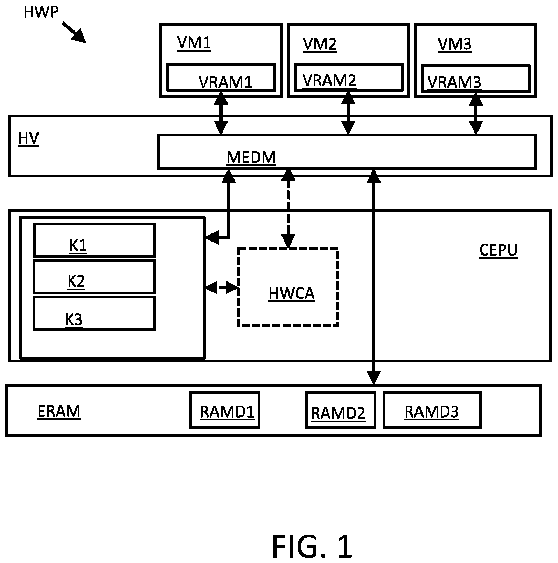

Die in Fig. 1 dargestellte erfindungsgemäße Hardware-Plattform HWP ist zur Ausführung eines erfindungsgemäßen Verfahrens zum Betreiben dieser Hardware-Plattform HWP eingerichtet.

Die dargestellte Hardware-Plattform HWP weist einen Hypervisor HV sowie einen externen RAM-Speicher ERAM auf. Die Hardware-Plattform HWP hostet darüber hinaus mehrere virtuelle Maschinen VM1, VM2, VM3. Der Hypervisor HV stellt den virtuellen Maschinen VM1, VM2, VM3 jeweils einen eigenen virtualisierten Arbeitsspeicher VRAM1, VRAM2, VRAM3 in Gestalt eines virtualized RAMs bereit und generiert zufällige Schlüssel K1, K2, K3, welche jeweils einer virtuellen Maschine VM1, VM2, VM3 zugeordnet sind. Die Schlüssel K1, K2, K3 werden im CPU-internen Speicher innerhalb der CPU CEPU, hier CPU-internen Registern oder Caches CPUIR, abgelegt und nicht exportiert bzw. ausgelagert. Bei Schreibzugriffen einer virtuellen Maschine VM1, VM2, VM3 auf deren virtualisierten Arbeitsspeicher VRAM1, VRAM2, VRAM3 verschlüsselt der Hypervisor HV mithilfe eines softwarebasierten Speicher-Verschlüsselungs-und-Entschlüsselungs-Moduls MEDM die Daten mit dem jeweils der virtuellen Maschine VM1, VM2, VM3 zugehörigen Schlüssel K1, K2, K3, bevor diese in den externen RAM-Speicher ERAM geschrieben werden. Außerhalb der CPU CEPU liegen die Daten der virtuellen Maschinen VM1, VM2, VM3 somit nur verschlüsselt als jeweils mit dem Schlüssel K1, K2, K3 verschlüsselte RAM-Daten RAMD1, RAMD2, RAMD3 vor. Bei Lesezugriffe werden die Daten der virtuellen Maschinen VM1, VM2, VM3 vom externen RAM ERAM gelesen und durch den Hypervisor HV entschlüsselt, bevor sie der jeweiligen virtuellen Maschine VM1, VM2, VM3 bereitgestellt werden. Bevorzugt findet die Ver- und Entschlüsselung selbst innerhalb der CPU-internen Register oder Caches CPUIR1, CPUIR2, CPUIR3 statt. Optional kann ein Hardware-Crypto-Accelerator zur Beschleunigung der Ver- und Entschlüsselung hinzugezogen werden.

Das Speicher-Verschlüsselungs-und-Entschlüsselungs-Modul MEDM instrumentiert dabei das Laden des entsprechenden Schlüssels K1, K2, K3 aus den CPU-Registern.

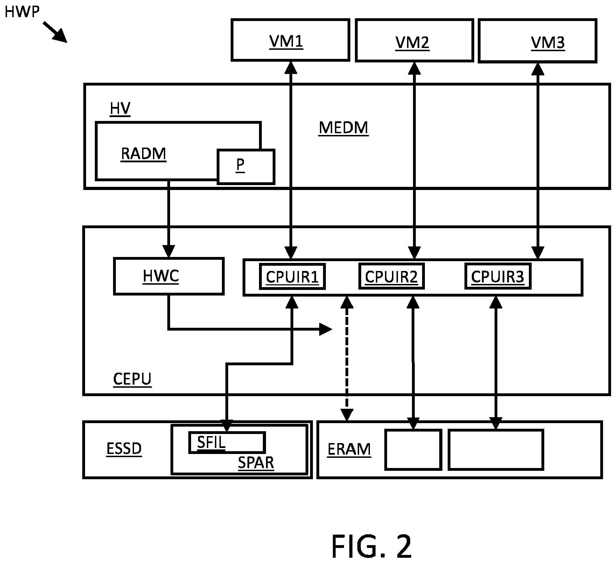

Bei dem in Fig. 2 dargestellten Ausführungsbeispiel weist eine Hardware-Plattform HWP einen Hypervisor HV sowie eine externe Festplatte SSD auf. Dier Hypervisor HV entzieht der Hardware-Plattform HWP oder mindestens einer von mehreren auf der Hardware-Plattform HWP gehosteten virtuellen Maschinen VM1, VM2, VM3 den Zugriff auf einen externen RAM-Baustein ERAM. Da der CPU interne Speicher typischerweise nicht ausreicht, um komplexere Applikationen oder gesamte VMs auszuführen, wird den virtuellen Maschinen VM1, VM2, VM3 eine verschlüsselte Swap-Partition SPAR oder eine verschlüsselte Swap-Datei SFIL bereitgestellt, wohin die Inhalte aus den Caches ausgelagert werden können. Auch bei diesem Ansatz ist es möglich, für unterschiedliche Security-Domänen mit unterschiedlichen Schlüsseln verschlüsselte Swap-Partitionen SPAR oder Swap-Dateien SFIL bereitzustellen.

In einem weiteren, nicht eigens dargestellten Ausführungsbeispiel, welches im Übrigen dem in Fig. 2 dargestellten Ausführungsbeispiel entspricht, wird einer auf der Hardware-Plattform HWP ablaufenden Applikation oder einer auf der Hardware-Plattform HWP ablaufenden virtuellen Maschine VM1, VM2, VM3 der Zugriff auf den externen RAM-Speicher ERAM nur temporär, z.B. während einer Security-kritischen Phase oder Berechnung, entzogen. Dies kann entweder durch den Host oder durch die virtuelle Maschine VM1, VM2, VM3 selbst, z.B. auf Basis der Kritikalität der zu verarbeitenden Daten oder der Art der Berechnung oder als Reaktion auf potenziell erkannte Angriffe, veranlasst werden.

Bei dem in Fig. 2 dargestellte Ausführungsbeispiel sieht dabei eine Systemkonfiguration HWC eine verschlüsselte Partition in an sich bekannter Weise auf einer externen Festplatte ESSD vor und stellt diese als Swap-Partition bereit. Erfindungsgemäß ist ein RAM Access Decision Module RADM als Softwarelösung im Hypervisor HV implementiert. Das RAM Access Decision Module RADM entzieht basierend auf einer statischen oder dynamischen Sicherheitsrichtlinie P einer virtuellen Maschine VM1, VM2, M3 den Zugriff auf den externen RAM-Speicher ERAM. Dadurch ist die CPU CEPU gezwungen, die Daten der virtuellen Maschine VM1, VM2, VM3 in die verschlüsselte Swap-Partition SPAR und/oder die verschlüsselte Swap-Datei SFIL auszulagern anstelle sie unverschlüsselt in den externen RAM-Speicher ERAM zu schreiben.

Diese beiden in Fig. 1 und 2 dargestellten Ausführungsbeispiele verwenden einen Hypervisor HV zur Realisierung der Erfindung. Dabei wird der Arbeitsspeicher einer virtuellen Maschine VM1, VM2, VM3 durch den Hypervisor HV verschlüsselt. In weiteren, nicht eigens gezeigten Ausführungsbeispielen wird die Erfindung durch ein Betriebssystem realisiert, wobei der Arbeitsspeicher eines vom Betriebssystem ausgeführten Prozesses durch das Betriebssystem verschlüsselt wird.

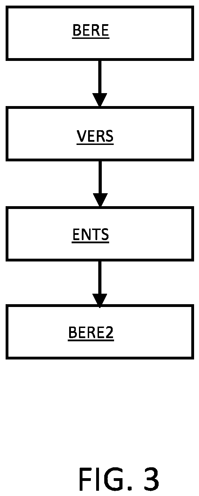

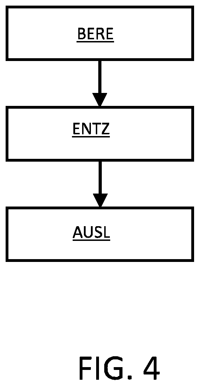

In Fig. 3 und 4 sind Ablaufdiagramme des erfindungsgemäßen Verfahrens gezeigt.

In Fig. 3 ist der Ablauf des ersten Ausführungsbeispiels vereinfacht dargestellt. Der Hypervisor HV der Fig. 1 stellt den virtuellen Maschinen VM1, VM2, VM3 jeweils in einem Bereitstellungsschritt BERE einen eigenen virtualisierten Arbeitsspeicher VRAM1, VRAM2, VRAM3 in Gestalt eines virtualized RAMs bereit, wobei im Bereitstellungsschritt BERE zudem wie oben beschrieben die zufälligen Schlüssel generiert werden, welche im CPU-internen Speicher, hier CPU-internen Registern oder Caches CPUIR abgelegt werden und nicht exportiert bzw. ausgelagert werden.

Bei Schreibzugriffen einer virtuellen Maschine VM1, VM2, VM3 auf deren virtualisierten Arbeitsspeicher VRAM1, VRAM2, VRAM3 verschlüsselt der Hypervisor HV mithilfe eines Memory En-/Decryption Modules MEDM die Daten mit dem jeweils der virtuellen Maschine VM1, VM2, VM3 zugehörigen Schlüssel in einem Verschlüsselungsschritt VERS, bevor diese in den externen RAM-Speicher ERAM geschrieben werden.

Bei Lesezugriffe werden die Daten der virtuellen Maschinen VM1, VM2, VM3 vom externen RAM ERAM gelesen und durch den Hypervisor HV in einem Entschlüsselungsschritt ENTS entschlüsselt, bevor sie der jeweiligen virtuellen Maschine VM1, VM2, VM3 in einem Bereitstellungsschritt BERE2 bereitgestellt werden.

In Fig. 4 ist der Ablauf des zweiten Ausführungsbeispiels vereinfacht dargestellt. Die Systemkonfiguration sieht eine verschlüsselte Partition auf der HDD/SSD vor (Stand der Technik) und stellt diese in einem Bereitstellungsschritt BERE als Swap-Partition SPAR bereit. Erfindungsgemäß ist ein RAM Access Decision Module RADM als Softwarelösung im Hypervisor HV implementiert, welches basierend auf einer statischen oder dynamischen Policy einer VM den Zugriff auf den externen RAM in einem Entziehungsschritt ENTZ entzieht. Dadurch ist die CPU CEPU gezwungen, die VM-Daten in die verschlüsselte Swap-Partition SPAR in einem Auslagerungsschritt AUSL auszulagern anstelle sie unverschlüsselt in den RAM zu schreiben.

In den vorgenannten Ausführungsbeispielen ist die Hardware-Plattform HWP ein industrielles Steuergerät. In weiteren, nicht eigens dargestellten Ausführungsbeispielen, welche dem dargestellten Ausführungsbeispiel entsprechen, ist die Hardware-Plattform HWP ein Fertigungsgerät oder ein Bearbeitungsgerät. In weiteren Ausführungsbeispielen weist die Hardware-Plattform ein industrielles Steuergerät oder ein Fertigungsgerät oder ein Bearbeitungsgerät auf.

## Patentansprüche

1. Verfahren zum sicheren Betreiben eines Betriebssystems oder einer Firmware auf einer Hardware-Plattform (HWP) mit mindestens einem externen RAM-Speicher (ERAM), bei welchem dem Betriebssystem oder der Firmware ein virtualisiertes RAM (VRAM1, VRAM2, VRAM3) bereitgestellt wird und Daten des virtualisierten RAMs (VRAM1, VRAM2, VRAM3) mittels Softwareverschlüsselung verschlüsselt werden und nachfolgend in dem mindestens einen externen RAM-Speicher (ERAM) gespeichert werden.

2. Verfahren nach Anspruch 1, bei welchem der mindestens eine externe RAM-Speicher (ERAM) mit mindestens einem externen RAM-Baustein gebildet ist.

3. Verfahren nach einem der vorhergehenden Ansprüche, bei welchem sämtliche Daten des virtualisierten RAMS (VRAM1, VRAM2, VRAM3) in dem mindestens einen externen RAM-Speicher (ERAM) gespeichert werden.

4. Verfahren nach einem der vorhergehenden Ansprüche, bei welchem Swap-Daten des virtualisierten RAMS (VRAM1, VRAM2, VRAM3) in dem mindestens einen externen RAM-Speicher (ERAM) gespeichert werden.

5. Verfahren nach einem der vorhergehenden Ansprüche, bei welchem der externe RAM-Speicher (ERAM) mit mindestens einer Festplatte (ESSO) und/oder mindestens einer Festplattenpartition (SPAR) und/oder mindestens einer Swap-Datei (SFIL) gebildet ist.

6. Verfahren nach einem der vorhergehenden Ansprüche, bei welchem die Daten nach einem Auslesen aus dem mindestens einen externen RAM-Speicher (ERAM) mittels Softwareentschlüsselung entschlüsselt werden.

7. Verfahren nach einem der vorhergehenden Ansprüche, bei welchem die Daten des virtualisierten RAMs (VRAM1, VRAM2, VRAM3) abhängig von einer Sicherheitsrichtlinie (P) und einem Inhalt des virtualisierten RAMS (VRAM1, VRAM2, VRAM3) mittels Softwareverschlüsselung verschlüsselt werden und nachfolgend in dem mindestens einen externen RAM-Speicher (ERAM) gespeichert werden.

8. Verfahren nach dem vorhergehenden Anspruch, bei welchem ein unverschlüsselter Speicherzugriff auf den mindestens einen externen RAM-Speicher (ERAM) abhängig von der Sicherheitsrichtlinie (P) unterbunden wird.

9. Verfahren nach einem der vorhergehenden Ansprüche, bei welchem die Hardware-Plattform (HWP) einen Prozessor (CEPU) aufweist, wobei die Softwareverschlüsselung mittels des Prozessors (CEPU) erfolgt.

10. Verfahren nach einem der vorhergehenden Ansprüche, bei welchem mindestens zwei Betriebssysteme oder Firmwares auf der Hardware-Plattform (HWP) betrieben werden und die Schritte des Verfahrens für jede der Betriebssysteme oder Firmwares durchgeführt wird, wobei für die Softwareverschlüsselung für jedes der Betriebssysteme oder Firmwares mindestens ein eigener separater Schlüssel (K1, K2, K3) verwendet wird.

11. Hardware-Plattform, ausgebildet zur Ausführung eines Verfahrens nach einem der vorhergehenden Ansprüche mit mindestens einem externen RAM-Speicher (ERAM) und mit einem Hypervisor (HV), welche ausgebildet ist, einem Betriebssystem oder einer Firmware ein virtualisiertes RAM (VRAM1, VRAM2, VRAM3) bereitzustellen, wobei der Hypervisor (HV) ausgebildet ist, Daten des virtualisierten RAMs (VRAM1, VRAM2, VRAM3) mittels Softwareverschlüsselung zu verschlüsseln und nachfolgend in dem mindestens einen externen RAM-Speicher (ERAM) zu speichern.

12. Hardware-Plattform nach einem der vorhergehenden Ansprüche, welche mindestens ein hardwarebasiertes Kryptographie-Beschleunigungsmodul (HWAC) aufweist, welches zur Beschleunigung der Softwareverschlüsselung ausgebildet ist.

13. Hardware-Plattform nach einem der vorhergehenden Ansprüche, welches ein industrielles Steuergerät und/oder ein Fertigungsgerät und/oder ein Bearbeitungsgerät ist oder aufweist.
